# EUROPEAN PATENT APPLICATION

(11) **EP 4 438 210 A1**
(43) Date of publication of application: **02.10.2024**
(21) Application number: 22898601.4
(22) Date of filing: 24.11.2022
(51) Int. Cl.: B23C 5/20, B23B 27/16, B23C 5/10

(54) **CUTTING INSERT AND CUTTING TOOL**

(30) Priority: 25.11.2021 JP 2021191001
(71) Applicant: Mitsubishi Materials Corporation, Tokyo 100-8117 (JP)
(72) Inventor: KITAJIMA, Jun, Tokyo 100-8117 (JP); NOMIYAMA, Yu, Tokyo 100-8117 (JP); WATANABE, Rikuki, Tokyo 100-8117 (JP); KAGOTA, Mahiro, Tokyo 100-8117 (JP)
(74) Representative: Hoffmann Eitle
(86) International application number: PCT/JP2022/043287
(87) International publication number: WO 2023/095819

(57) **Abstract**

This cutting insert (1) is a plate-shaped cutting insert (1) having a center line (O), and includes an upper surface (2) that forms one surface of two surfaces facing each other in an axial direction along the center line (O); a lower surface (3) that forms the other surface of the two surfaces facing each other; a side surface (4) that connects the upper surface (2) and the lower surface (3) in the axial direction; and a mounting hole (6) that passes through the cutting insert in the axial direction, in which the side surface (4) extends obliquely inward in a radial direction perpendicular to the center line (O) from the upper surface (2) toward the lower surface (3) in the axial direction, the lower surface (3) includes a seating surface (3a) having a flat surface perpendicular to the center line (O), and a pedestal (3b) having a protruding portion protruding from an outer peripheral edge of the seating surface (3a) in a direction away from the upper surface (2) in the axial direction beyond the seating surface (3a), and a top portion (3bc) of the protruding portion of the pedestal (3b) is perpendicular to the center line (O).

## Description

### [Technical Field]

The present invention relates to a cutting insert and a cutting tool. Priority is claimed on Japanese Patent Application No. 2021-191001, filed November 25, 2021, the content of which is incorporated herein by reference.

### [Background Art]

In general, in a manufacturing step of a single-sided cutting insert as described in Patent Documents 1 and 2, a powder mixture of a hard metal component and a binder is press-formed to prepare a green compact for a cutting insert, and the green compact for a cutting insert is sintered in a state of being placed on a sintering plate. As described in Patent Document 3, although a contact reaction inhibitor is applied to a carbon sintering plate, unevenness is formed on a portion (a lower surface on a seating surface side) of a cutting insert that comes into contact with a sintering plate due to adhesion of the contact reaction inhibitor or sintering reaction marks. In a case where unevenness is formed on the seating surface of the cutting insert, an unstably clamped state is incurred when the cutting insert is mounted to a tool main body.

### [Citation List]

### [Patent Documents]

[Patent Document 1]
   Japanese Unexamined Patent Application, First Publication No. H11-333616
[Patent Document 2]
   Japanese Unexamined Patent Application, First Publication No. 2005-319575
[Patent Document 3]
   Japanese Unexamined Patent Application, First Publication No. 2003-113404

### [Summary of Invention]

### [Technical Problem]

After the sintering, a polishing step of flattening the lower surface, which is to become the seating surface of the cutting insert, by removing the unevenness of the lower surface is required, and thus efforts and costs are required for manufacturing.

The present invention has been made in view of such circumstances, and an object thereof is to provide a cutting insert and a cutting tool capable of, in a case of being applied to a single-sided cutting insert, achieving both cost reduction and securing flatness of a seating surface by eliminating a need for a grinding step for a lower surface including the seating surface.

### [Solution to Problem]

In order to solve such a problem and achieve the object, the present invention proposes the following means.

A cutting insert according to an aspect of the present invention is a cutting insert having a plate shape and having a center line, including: an upper surface that forms one surface of two surfaces facing each other in an axial direction along the center line; a lower surface that forms the other surface of the two surfaces facing each other; a side surface that connects the upper surface and the lower surface in the axial direction; and a mounting hole that passes through the cutting insert in the axial direction, in which the side surface extends obliquely inward in a radial direction perpendicular to the center line from the upper surface toward the lower surface in the axial direction, the lower surface includes a seating surface having a flat surface perpendicular to the center line, and a pedestal having a protruding portion protruding from an outer peripheral edge of the seating surface in a direction away from the upper surface in the axial direction beyond the seating surface, and a top portion of the protruding portion of the pedestal is perpendicular to the center line.

According to the configuration of the present embodiment, in the lower surface of the cutting insert, only the pedestal having the protruding portion protruding in the direction away from the upper surface beyond the seating surface comes into contact with a sintering plate, and the seating surface having the flat surface that abuts on an insert mounting seat does not come into contact with the sintering plate. Therefore, adhesion of a contact reaction inhibitor and generation of sintering reaction marks do not occur on the seating surface. Accordingly, a step of removing contact reaction inhibitor deposits and sintering reaction marks on the seating surface, that is, a grinding step for the lower surface is not required, so that manufacturing steps are shortened, and it is possible to achieve both cost reduction and securing flatness of the seating surface.

In the cutting insert according to the aspect of the present invention, a configuration may be adopted in which a ridge between the upper surface and the side surface is inclined with respect to the flat surface perpendicular to the center line at a portion that protrudes most in the axial direction.

In a cutting insert of which a side surface forming a flank face is not polished, in order to polish a lower surface, which is to be a seating surface of a single-sided insert having a cutting edge only on a ridge between an upper surface and the side surface, the upper surface needs to be brought into contact with a jig to hold the cutting insert. Since a contact area with the jig needs to be large in order to prevent a main cutting edge from being damaged by the contact with the jig, for example, the ridge between the upper surface and the side surface that protrudes most in a center line direction of the upper surface as shown in FIG. 6 of Patent Document 1 requires a portion parallel to the lower surface, and a shape of a second cutting edge 26 is determined by this protruding flat surface. On the other hand, by using the lower surface according to the aspect of the present invention, it is possible to design all cutting edges of the cutting insert without limitation of a polishing step. Accordingly, as a cutting tool in which a cutting insert is mounted to an insert mounting seat of a tool main body that rotates about an axis, it is possible to set an optimum axial rake angle in an axial direction and an optimum radial rake angle in a radial direction.

In the cutting insert according to the aspect of the present invention, the top portion of the protruding portion of the pedestal may be provided with a flat surface.

In addition, in the cutting insert according to the aspect of the present invention, a configuration may be adopted in which the top portion of the protruding portion of the pedestal has a ridge shape.

According to this configuration, although there are disadvantages from the viewpoint of an effect of suppressing deformation during sintering, the wider seating surface enables stable abutting on the insert mounting seat of the tool main body.

In addition, in the cutting insert according to the aspect of the present invention, a configuration may be adopted in which the pedestal is provided over an entire outer peripheral edge of the seating surface.

According to this configuration, stable support is possible when the sintering process is performed during manufacturing of the cutting insert, and deformation during the sintering can be suppressed.

In the cutting insert according to the aspect of the present invention, a configuration may be adopted in which the pedestal is provided along a part of the outer peripheral edge of the seating surface.

A cutting tool according to another aspect of the present invention includes: a tool main body that is rotatable in a tool rotation direction about an axis of rotation and has an insert mounting seat to which the cutting insert is mounted, in which the insert mounting seat has a bottom surface on which the seating surface of the cutting insert abuts.

According to this configuration, when the cutting insert is mounted to the tool main body, the seating surface of the cutting insert abuts on the bottom surface of the insert mounting seat, so that the cutting insert is mounted to the tool main body. Since the flat surfaces abut on each other, the cutting insert can be mounted to the tool main body without rattling, and a stably clamped state can be secured.

### [Advantageous Effects of Invention]

According to the above aspects of the present invention, it is possible to provide a cutting insert and a cutting tool capable of, in a case of being applied to a single-sided cutting insert, achieving both cost reduction and securing flatness of a seating surface by eliminating a need for a grinding step for a lower surface including the seating surface.

### [Brief Description of Drawings]

FIG. 1 is a perspective view showing a cutting insert according to a first embodiment of the present invention from a rake face side.
FIG. 2A is a plan view of the cutting insert according to the first embodiment of the present invention.
FIG. 2B is a side view showing the cutting insert according to the first embodiment of the present invention from a long side side.
FIG. 2C is a side view showing the cutting insert according to the first embodiment of the present invention from a short side side.
FIG. 3 is a perspective view showing the cutting insert according to the first embodiment of the present invention from a seating surface side.
FIG. 4 is a perspective view showing a configuration of a tip side of a tool main body.
FIG. 5 is a perspective view showing a seating side of a cutting insert in Modification Example 1 of the first embodiment.
FIG. 6 is a perspective view showing a seating side of a cutting insert in Modification Example 2 of the first embodiment.
FIG. 7 is a perspective view showing a seating side of a cutting insert according to Modification Example 3 of the first embodiment.
FIG. 8 is a perspective view showing a seating side of a cutting insert in Modification Example 4 of the first embodiment.
FIG. 9 is a perspective view showing a cutting insert in Modification Example 5.
FIG. 10 is a perspective view showing the cutting insert in Modification Example 5.

### [Description of Embodiments]

Hereinafter, a cutting insert according to each embodiment of the present invention will be described with reference to the drawings.

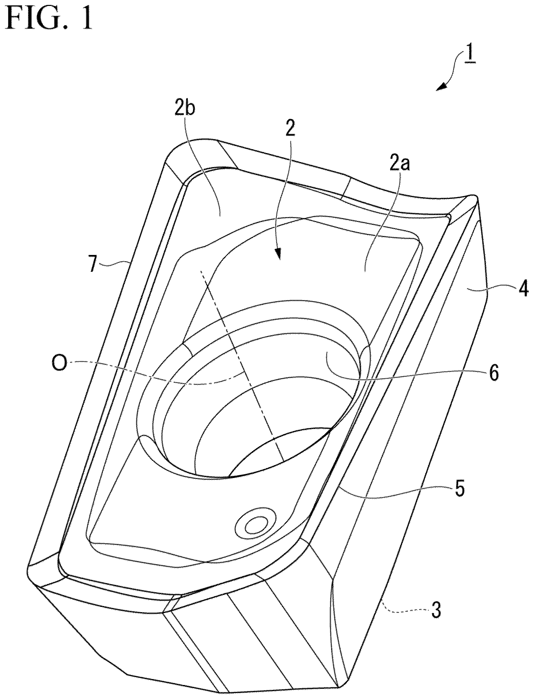

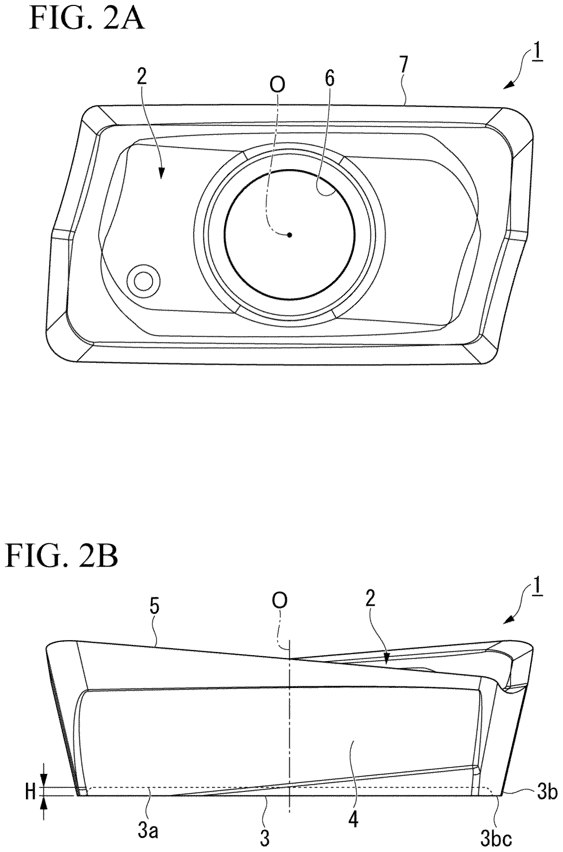

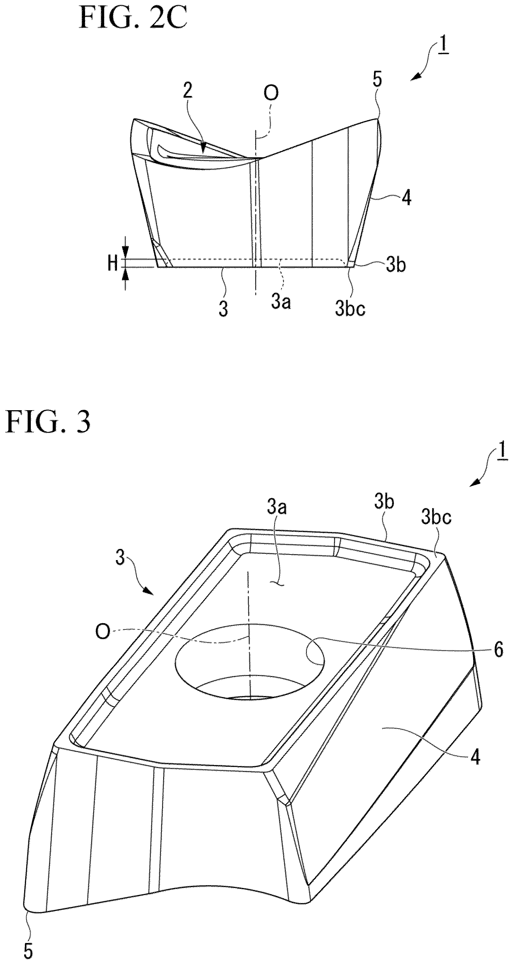

FIG. 1 is a perspective view showing a cutting insert 1 according to a first embodiment of the present invention from a rake face side. FIGS. 2A to 2C are three views (a plan view and side views) showing the cutting insert 1 according to the first embodiment of the present invention. FIG. 3 is a perspective view showing the cutting insert 1 according to the first embodiment of the present invention from a seating surface side. The cutting insert 1 of the present embodiment is removably mounted to a tool main body that rotates about an axis, and performs cutting work on a work material made of a metal material, such as steel.

### (Cutting Insert of First Embodiment)

The cutting insert 1 of the present embodiment shown in FIGS. 1, 2A to 2C, and 3 is formed of a hard material such as cemented carbide. The cutting insert 1 is formed in a plate shape having a polygonal shape that is rotationally symmetrical with respect to a center line O in the plan view seen from the center line O extending in a thickness direction. In the present embodiment, the cutting insert 1 has a rectangular shape in the plan view, but is not limited to this shape.

In the following description, a direction along the center line O may be simply referred to as a thickness direction. In addition, a direction orthogonal to the center line O may be simply referred to as a radial direction. Furthermore, a circumferential direction about an axis centered on the center line O may be simply referred to as a circumferential direction.

The cutting insert 1 includes a rake face (upper surface) 2 forming one surface of two surfaces facing each other in an axial direction along the center line O, a lower surface 3 forming the other surface of the two surfaces, side surfaces 4 that connects the rake face 2 to the lower surface 3, cutting edges 5 formed at intersecting ridges (ridges) 7 between the rake face 2 and the side surfaces 4, and a mounting hole 6 provided coaxially with the center line O. The mounting hole 6 is a through hole that is formed in the thickness direction of the cutting insert 1 and opens to both the rake face 2 and the lower surface 3. The side surface 4 extends obliquely inward in the radial direction perpendicular to the center line O from the rake face 2 toward the lower surface 3 in the axial direction. The lower surface 3 has a size that is included inside a projection region of the rake face 2 in the thickness direction. As shown in FIGS. 2A to 2C, the intersecting ridge 7 between the rake face 2 and the side surface 4 is inclined with respect to the flat surface perpendicular to the center line O at a portion that protrudes most in the axial direction.

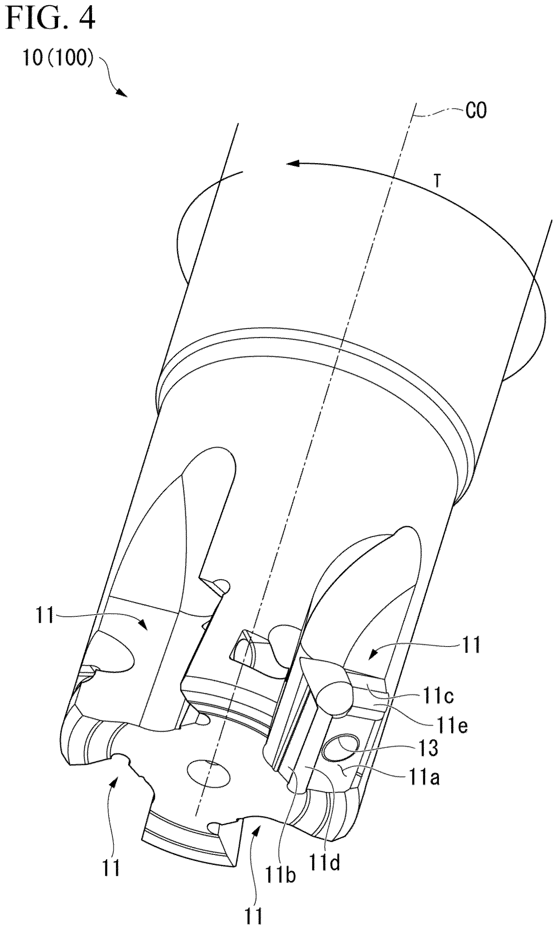

FIG. 4 is a perspective view showing a configuration of a tip side of a tool main body 10.

The cutting insert 1 is mounted to the tool main body 10 shown in FIG. 4 and used as a cutting tool together with the tool main body 10. The cutting insert 1 is removably mounted to an insert mounting seat 11 of the tool main body 10 rotatable about an axis of rotation CO by a clamp screw (not shown). The clamp screw is inserted into the mounting hole 6 of the cutting insert 1. The cutting insert 1 is restrained by the insert mounting seat 11 of the tool main body 10 when the cutting insert 1 is mounted to the tool main body 10. The insert mounting seat 11 is a pedestal to which the cutting insert 1 is mounted.

The insert mounting seat 11 has a bottom surface 1 1a, a long side wall surface 11b, and a short side wall surface 11c. In addition, the insert mounting seat 11 has a plurality of recessed grooves (recessed portions) 11d and 11e around the bottom surface 11a. The long side side recessed grooves (recessed portions) 11d are formed on both sides of the bottom surface 11a in the radial direction, and one thereof is formed between the bottom surface 11a and the long side wall surface 11b. The short side side recessed groove (recessed portion) 11e is formed between the bottom surface 11a and the short side wall surface 11c. The long side side recessed grooves 11d and the short side side recessed groove 11e are recessed in a direction opposite to a tool rotation direction T.

The bottom surface 11a is a surface facing the tool rotation direction T of the tool main body 10. The bottom surface 11a is a surface facing a seating surface 3a of the cutting insert 1, which will be described later, and has substantially the same area as the bottom surface 11a. A screw hole 13 into which the clamp screw 12 is inserted is formed substantially at a center of the bottom surface 1 1a.

As shown in FIG. 1, the rake face 2 of the cutting insert 1 has a flat surface 2a provided around the mounting hole 6 and an inclined surface 2b inclined from the cutting edge 5 toward the flat surface 2a. The flat surface 2a is a surface perpendicular to the center line O.

As shown in FIG. 3, the lower surface 3 of the cutting insert 1 includes the seating surface 3a that comes into contact with the bottom surface 11a of the insert mounting seat 11 and is restrained, and a pedestal (protruding portion) 3b that does not come into contact with the bottom surface 11a of the insert mounting seat 11. Specifically, the lower surface 3 includes the seating surface 3a formed of a flat surface perpendicular to the center line O and the pedestal 3b formed of a protruding portion protruding from an outer peripheral edge of the seating surface 3a in a direction away from the rake face 2 in the axial direction beyond the seating surface 3a. A top portion 3bc of the pedestal 3b is perpendicular to the center line O.

The seating surface 3a is the flat surface orthogonal to the center line O. The seating surface 3a is parallel to the flat surface 2a on a rake face 2 side. The seating surface 3a is a surface that comes into contact with the bottom surface 1 1a of the insert mounting seat 11. The seating surface 3a has substantially the same area as or a slightly smaller area than the bottom surface 11a of the insert mounting seat 11. The mounting hole 6 is open substantially at the center of the seating surface 3a.

The pedestal 3b is formed throughout the circumferential direction (over an entire outer peripheral edge) of the seating surface 3a. In addition, the pedestal 3b is formed on the outer peripheral edge of the seating surface 3a. The pedestal 3b protrudes outward in the axial direction from the seating surface 3a. That is, the pedestal 3b protrudes in a direction away from the rake face 2 beyond the seating surface 3a in the axial direction. Accordingly, a recessed portion recessed inward in the axial direction is formed by the seating surface 3a and the pedestal 3b on a seating side of the cutting insert 1.

The top portion 3bc of the pedestal 3b is provided with a flat surface perpendicular to the center line O, and there is no grinding mark on the entire flat surface. That is, in the present embodiment, the top portion 3bc of the pedestal 3b of the cutting insert 1 is sintered in a state of being in contact with a sintering plate, and is not subjected to grinding work after the sintering.

In the present embodiment, the pedestal 3b is provided over the entire outer peripheral edge of the seating surface 3a, but is not limited thereto. The pedestal 3b may be provided over a part of the outer peripheral edge.

In addition, in the present embodiment, the top portion 3bc of the pedestal 3b has a flat surface perpendicular to the center line O, but is not limited thereto. The top portion 3bc of the pedestal 3b may have a surface other than the flat surface. For example, the top portion 3bc may have a curved surface forming a ridge shape.

As shown in FIGS. 2B and 2C, a height H of the pedestal 3b in the axial direction corresponds to an amount of step between the seating surface 3a and the top portion 3bc of the pedestal 3b. The height H of the pedestal 3b is constant throughout. The height H of the pedestal 3b is preferably in a range of, for example, 0.15 mm to 0.50 mm. In addition, the height H of the pedestal 3b is more preferably in a range of 0.20 mm to 0.40 mm, and is set to 0.30 mm in the present embodiment.

When the cutting insert 1 of the present embodiment is mounted to the tool main body 10 and the seating surface 3a of the cutting insert 1 is in a state of being in contact with the bottom surface 11a of the insert mounting seat 11, the pedestal 3b enters the long side side recessed grooves 11d and the short side side recessed groove 11e of the insert mounting seat 11 and thus does not come into contact with the bottom surface 11a of the insert mounting seat 11.

With such a configuration, a restraining strength of the cutting insert 1 with respect to the tool main body 10 is secured mainly by a surface contact between the bottom surface 11a and the seating surface 3a. Since the cutting insert 1 is restrained by the seating surface 3a and the bottom surface 11a which are flat against each other, rattling does not occur in the cutting insert 1, and a stably clamped state can be obtained for the insert mounting seat 11 of the tool main body 10.

In addition, in the cutting insert 1, a portion (pedestal 3b) that comes into contact with the sintering plate during the sintering is provided separately from the seating surface 3a, and the top portion 3bc of the pedestal 3b has a shape that does not come into contact with the bottom surface 11a of the insert mounting seat 11 of the tool main body 10 when the cutting insert 1 is mounted to the tool main body 10, so that grinding work of the top portion 3bc of the pedestal 3b is not required. Since the seating surface 3a does not come into contact with the sintering plate, no sintering mark (fine unevenness) is generated on the seating surface 3a, and flatness is secured. Therefore, a grinding step that has been performed on the seating side of the cutting insert 1 in the related art can be omitted. Therefore, according to the cutting insert 1 of the present embodiment, it is possible to realize both cost reduction and securing the flatness of the seating surface 3a.

In addition, in the present embodiment, the pedestal 3b is provided on the outer peripheral edge of the seating surface 3a. Accordingly, the area of the seating surface 3a can be maximized on the seating side of the cutting insert 1, and the restraining strength with respect to the tool main body 10 can be increased.

By including the tool main body 10 to which the cutting insert 1 of the present embodiment is mounted, a cutting tool 100 having high machining accuracy can be obtained.

While the first embodiment of the present invention has been described in detail with reference to the drawings, specific configurations are not limited to the embodiment, and design changes and the like within a range that does not deviate from the gist of the present invention are also included.

For example, in the cutting insert 1 of the first embodiment, the pedestal 3b is formed over the entire outer peripheral edge of the seating surface 3a, but the shape of the pedestal 3b of the cutting insert 1 is not limited to the above-described shape.

Hereinafter, some modification examples of the pedestal 3b will be described. In the following description, configurations common to those already described are assigned the same reference numerals, and repeated descriptions thereof will be omitted.

### (Modification Example 1)

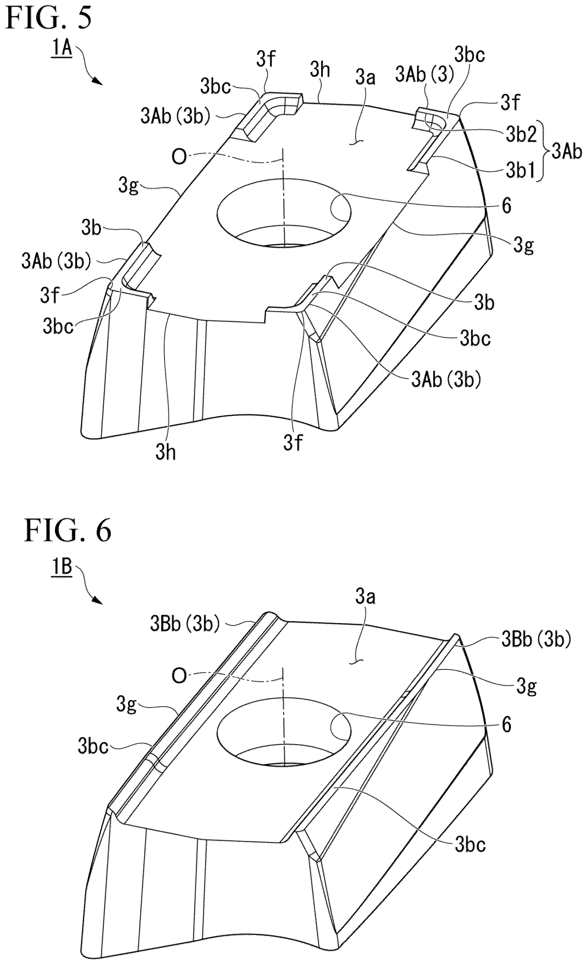

FIG. 5 is a perspective view showing a seating side of a cutting insert 1A in Modification Example 1 of the first embodiment.

As shown in FIG. 5, in the cutting insert 1A of Modification Example 1, a pedestal 3Ab is formed at each of four corner portions 3f on a lower surface 3 side. All of the four pedestals 3Ab have a symmetrical shape in a long side direction and a short side direction of the cutting insert 1. Each pedestal 3Ab has a first portion 3b1 extending along a corresponding long side 3g and a second portion 3b2 extending along a corresponding short side 3h, and has an L shape in a plan view. Between the pedestals 3Ab adjacent to each other in the circumferential direction, the seating surface 3a located on the rake face 2 side from the top portion 3bc of each pedestal 3Ab in the axial direction is present.

### (Modification Example 2)

FIG. 6 is a perspective view showing a seating side of a cutting insert 1B in Modification Example 2 of the first embodiment.

As shown in FIG. 6, in the cutting insert 1B of Modification Example 2, a pedestal 3Bb is formed along each of the pair of long sides 3g of the seating surface 3a. Each pedestal 3Bb is formed over an entire long side 3g.

### (Modification Example 3)

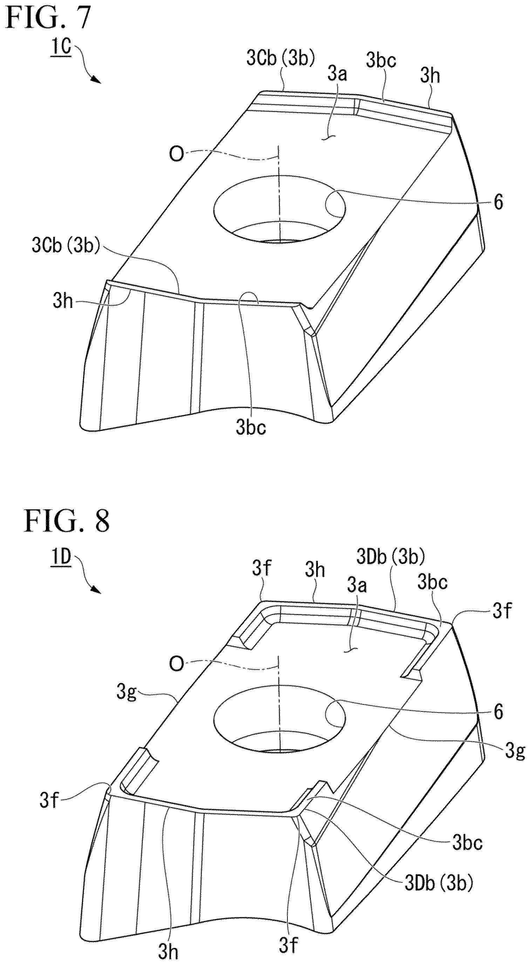

FIG. 7 is a perspective view showing a seating side of a cutting insert 1C in Modification Example 3 of the first embodiment.

As shown in FIG. 7, in the cutting insert 1C of Modification Example 3, a pedestal 3Cb is formed along each of the pair of short sides 3h of the seating surface 3a. Each pedestal 3Cb is formed over an entire short side 3h.

### (Modification Example 4)

FIG. 8 is a perspective view showing a seating side of a cutting insert 1D in Modification Example 4 of the first embodiment.

As shown in FIG. 8, in the cutting insert 1D of Modification Example 4, pedestals 3Db are formed to include the pair of short sides 3h and the four corner portions 3f in the outer peripheral edge of the seating surface 3a. The pedestal 3Db is provided along the entire short side 3h and portions of the long side 3g from both ends of the short side 3h.

According to Modification Examples 1 to 4, the flatness of the seating surface 3a can be secured while a horizontal posture during firing is maintained by the pedestal 3b. In addition, by including the pedestal 3b in a predetermined range of at least the four corner portions 3f, the pair of long sides 3g, and the pair of short sides 3h on the outer peripheral edge of the seating surface 3a, it is possible to reduce material costs. Furthermore, the top portion 3bc of each pedestal 3b in Modification Examples 1 to 4 has no grinding mark, and manufacturing steps can be simplified as in the first embodiment.

For example, the shape of the cutting insert in the plan view is not limited to the shapes of the above-described embodiments.

The shape of the cutting insert in the plan view may be other than a rectangular shape, and may be a triangular shape, a square shape, or a circular shape.

### (Modification Example 5)

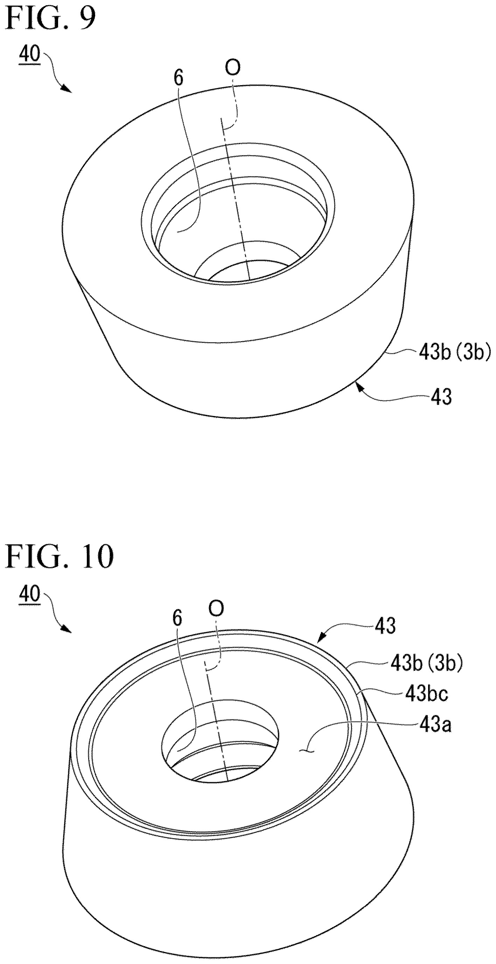

FIGS. 9 and 10 are perspective views showing a cutting insert 40 in Modification Example 5.

For example, as shown in FIGS. 9 and 10, in a case of the cutting insert 40 having a circular shape in the plan view, it is preferable that a lower surface 43 having a seating surface 43a having a flat surface perpendicular to the center line O and a pedestal 43b formed on the entire outer peripheral edge of the seating surface 43a are formed on a seating side. A top portion 43bc of the pedestal 43b has no grinding mark and protrudes outward beyond the seating surface 43a in the axial direction.

In each of the above-described embodiments and modification examples, a configuration is adopted in which the pedestal 3b is provided on the outer peripheral edge of the seating surface 3a, but the pedestal 3b is not limited thereto. For example, the pedestal 3b may be provided in the seating surface 3a. Alternatively, the pedestal 3b may be provided not on the outer peripheral edge of the seating surface 3a but on an outer peripheral edge (outline) of the lower surface 3.

In addition, in each of the above-described embodiments and modification examples, a configuration is adopted in which one seating surface 3a is provided around the mounting hole 6 of the cutting insert, but the seating surface 3a is not limited thereto. For example, a pair of the seating surfaces 3a may be provided on both sides of the mounting hole 6 in the radial direction, or a plurality of the seating surfaces 3a may be provided around the mounting hole 6. Each seating surface 3a may be a flat surface perpendicular to the center line O.

### [Industrial Applicability]

According to the present invention, it is possible to provide a cutting insert and a cutting tool capable of, in a case of being applied to a single-sided cutting insert, achieving both cost reduction and securing flatness of a seating surface by eliminating a need for a grinding step for a lower surface including the seating surface.

### [Reference Signs List]

1 (1A, 1B, 1C, 1D): Cutting insert of first embodiment (Modification Examples 1 to 4)
2: Rake face (upper surface of first embodiment)
3: Lower surface of first embodiment
3a: Seating surface of cutting insert of first embodiment
3b (3Ab, 3Bb, 3Cb, 3Db): Pedestal of first embodiment (Modification Examples 1 to 4)
3bc: Top portion of pedestal of first embodiment
3f: Corner portion
3g: Long side
3h: Short side
4: Side surface
6: Mounting hole
7: Ridge
10: Tool main body
11: Insert mounting seat
11a, 11b, 11c: Bottom surface, long side wall surface, short side wall surface of insert mounting seat
40: Cutting insert of Modification Example 5
43: Lower surface of Modification Example 5
43a: Seating surface of Modification Example 5
43b: Pedestal of Modification Example 5
43bc: Top portion of pedestal of Modification Example 5
100: Cutting tool
O: Center line

## Claims

1. A cutting insert having a plate shape and having a center line, comprising:
an upper surface that forms one surface of two surfaces facing each other in an axial direction along the center line;
a lower surface that forms an other surface of the two surfaces facing each other;
a side surface that connects the upper surface and the lower surface in the axial direction; and
a mounting hole that passes through the cutting insert in the axial direction,
wherein the side surface extends obliquely inward in a radial direction perpendicular to the center line from the upper surface toward the lower surface in the axial direction,
the lower surface includes a seating surface having a flat surface perpendicular to the center line, and a pedestal having a protruding portion protruding from an outer peripheral edge of the seating surface in a direction away from the upper surface in the axial direction beyond the seating surface, and
a top portion of the protruding portion of the pedestal is perpendicular to the center line.

2. The cutting insert according to Claim 1, wherein a ridge between the upper surface and the side surface is inclined with respect to the flat surface perpendicular to the center line at a portion that protrudes most in the axial direction.

3. The cutting insert according to Claim 1 or 2, wherein the top portion of the protruding portion of the pedestal is provided with a flat surface.

4. The cutting insert according to any one of Claims 1 to 3, wherein the top portion of the protruding portion of the pedestal has a ridge shape.

5. The cutting insert according to any one of Claims 1 to 4, wherein the pedestal is provided over an entire outer peripheral edge of the seating surface.

6. The cutting insert according to any one of Claims 1 to 4, wherein the pedestal is provided along a part of the outer peripheral edge of the seating surface.

7. A cutting tool comprising:
the cutting insert according to any one of Claims 1 to 6;
a tool main body that is rotatable in a tool rotation direction about an axis of rotation and has an insert mounting seat to which the cutting insert is mounted,
wherein the insert mounting seat has a bottom surface on which the seating surface of the cutting insert abuts.
